# EUROPEAN PATENT SPECIFICATION

(11) **EP 1 543 719 B1**
(45) Date of publication and mention of the grant of the patent: **07.05.2008**
(21) Application number: 04029431.6
(22) Date of filing: 13.12.2004
(51) Int. Cl.: A01J 5/01, A01J 7/00

(54) **Process for manufacturing a flowmeter for milking plants provided with an automatic detachment device, and the flowmeter obtained**
Verfahren zur Herstellung eines Durchflussmessers für Melkanlagen mit einer automatischen Melkzeugabnahme und dadurch erhaltener Durchflussmesser
Procédé pour la fabrication d'un debitmètre pour une installation de traite avec une détachment des gobelets automatique et le debitmètre obtenu

(30) Priority: 17.12.2003 IT MI20032496
(43) Date of publication of application: 22.06.2005
(73) Proprietor: INTERPULS S.P.A., 42020 Albinea RE (IT)
(72) Inventor: Nicolini, Gabriele, 42042 Fabbrico (RE) (IT); Sicuri, Roberto, 43100 Parma (PR) (IT)
(74) Representative: Ripamonti, Enrico

(56) References cited:
- EP-A- 0 065 871
- DE-A1- 3 043 038
- GB-A- 2 124 877
- US-A- 4 714 048
- US-A- 5 394 831

## Description

The present invention relates to a process for manufacturing a flowmeter for controlling, in a milking plant, the device by which the milking unit is automatically detached from the teats of the animals to be milked, and the flowmeter obtained.

As is well known to the expert of the art, in a milking plant provided with an automatic detachment device, the operator still has to manually connect the milking unit to the teats of the animal. An automatic detachment device:
- enables the number of operators assigned to the milking plant to be reduced, with consequent labour cost reduction;
- prevents the dangerous animal over-milking phenomenon.

Such an device is based on measuring and indicating to a control centre the passage of the resultant milk through the milking unit. When the milk flow falls below a predetermined minimum value, the control centre interrupts vacuum feed to the milking unit and automatically detaches this latter from the teats of the animal.

To achieve this result, the automatic detachment device uses various components, including a flowmeter. This latter performs the important function of indicating passage of milk through the milking unit to the control centre. This is done by utilizing the electrical conductivity of the milk. This latter, if flow is sufficient, enables two electrodes disposed at a precise distance apart to be electrically connected together, so closing an electrical circuit. This closure is sensed by the control centre. When there is no milk flow, the circuit is opened.

Towards the end of milking, the milk flow is known to become increasingly more discontinuous. When a predetermined time interval is exceeded without the control centre sensing milk passage, the control centre interrupts vacuum feed to the milking unit by means of a valve contained in the flowmeter. The milking unit is then automatically detached from the teats of the animal by the action of a cylinder-piston mechanism also forming part of the automatic detachment device. The piston is connected to the milking unit by a cable which, as a consequence of the piston movement due to the stated vacuum interruption, is put under tension to hence detach the milking unit.

The flowmeter of an automatic detachment device has undergone significant development during recent years, with considerable improvement in its performance. Currently available flowmeters essentially consist of a body of suitable plastic material, a part of which is in the form of a cup provided with an inlet and outlet nozzle for the milk, these two nozzles forming part of the so-called milk passage conduit. One end of a rubber hose of food quality is mounted on the outlet nozzle, its other end being connected to the milk channel to enable the milk passing through the flowmeter to be discharged into it. Two stainless steel electrodes are positioned spaced apart along the outlet nozzle, they each normally consisting of a ring and a block welded to the ring, both of electrically conducting metal. The ring must be of centesimal tolerance and for this reason is normally formed from a piece of stainless steel tube which has been machine-ground. The block presents a threaded hole into which a screw can be screwed to electrically connect a conductor wire to the block. The ring of each electrode is incorporated into the outlet nozzle of the cup-shaped body while this is being injection-moulded (this requiring the stated centesimal tolerance), so that the two rings are coaxial to the outlet nozzle and spaced apart by a precise distance. Along the relative portion, the inner surface of the rings forms the inner surface of the outlet nozzle. The block of each of the two electrodes lies in a lateral portion of the outlet and is shaped with a trough, within which the electrical connection to the relative conductor wire is made by said screw. This trough is finally filled manually with insulating resin which, when hardened, prevents oxidation of the electrical connection by the moisture present in the environment in which a milking plant operates.

From the aforegoing it is apparent that when milk passes through the body of the flowmeter, the electrical conductivity of the milk means that the two said electrodes become electrically connected together, with the result that a signal is fed to the control centre based on the relative passage of current.

As milking approaches its end, milk passage through the flowmeter becomes increasingly more discontinuous, with the result that the described electrical circuit alternately opens and closes. Within the control centre a circuit opening time limit is set, which when exceeded causes a valve contained within the cup part of the flowmeter body to close the flowmeter outlet nozzle, with the result that the relative milking unit is isolated from the rest of the plant. The milking unit hence finds itself at atmospheric pressure, so that it can be removed from the animal. This is achieved by means of the aforesaid conventional automatic detachment mechanism of cylinder and piston type, this latter being connected to the milking unit by a cable and being activated by the vacuum.

With regard to the said flowmeter valve, this comprises a circular elastic membrane housed in the cup-shaped part. The membrane is of a material suitable for making contact with food, normally a rubber or a thermoplastic material having this characteristic. From the centre of the membrane there coaxially extends downwards a hollow stem which at its lower end carries a closure plug by which the outlet nozzle can be closed to hence interrupt said milk passage conduit. The membrane has a diameter slightly larger than the seat provided to receive it, so that it can assume only two positions of stable equilibrium, in which the closure plug respectively closes and opens the milk passage conduit. The membrane can be made to pass snapwise from one stable equilibrium configuration to the other by the action of the vacuum, as will be better explained hereinafter.

A cover of plastic material, which in known flowmeters is not always of a type suitable for contact with food, closes the cup-shaped part of the flowmeter body to upperly define the chamber lying above the elastic membrane. To enable the required degree of vacuum to be created in this upper chamber when required, said cover is provided with a nipple on which one end of a hose is mounted, its other end being connected to the plant vacuum source. Means are provided by which, by action by the control centre, atmospheric air can be fed into said tube and hence into the upper chamber, or be removed from this chamber. This enables the membrane to pass from one to the other of its two stable equilibrium configurations and consequently operate the closure plug connected to it. The connection between the said cover and the flowmeter body and that between this latter and the membrane must form a seal to prevent vacuum consumption or malfunction.

The aforedescribed known flowmeter is fixed by screws to a metal bracket positioned on the milking location.

During the milking operation, in that flowmeter chamber above the membrane there is the same degree of vacuum or depression as in the chamber below the membrane and hence as in said milk passage conduit, the membrane being in that configuration corresponding to the raised position of the closure plug, to hence enable milk to pass through the passage conduit. The closure plug is maintained stable in this raised position because the membrane is in a stable equilibrium configuration and because of a coaxial vertical guide pin inserted into the closure plug and fixed to the cover.

When the preset time limit has been exceeded without milk passing into the passage conduit, the control centre acts to feed atmospheric air into that chamber above the membrane. Because of the vacuum difference between the flowmeter upper chamber and lower chamber (the degree of vacuum present in the lower chamber not having changed), the membrane passes snapwise from its current configuration, to its other stable equilibrium configuration in which the closure plug closes the milk outlet nozzle, to also consequently interrupt the supply of vacuum to the relative milking unit.

A description has already been given of how the two ring electrodes positioned in the outlet nozzle of known flowmeters are made and applied. The fact that the ring part of these electrodes is machine ground to achieve the required centesimal tolerance, the fact that their electrical connection block is welded to the ring, the fact that a screw is used to make the electrical connection, and the fact that the two blocks, including the screw and the end of the corresponding electric wire, have to then be embedded in the manually poured insulating resin (as stated, with not always optimal results in terms of electrode insulation and protection of the electrical connection), means that lengthy and delicate operations are involved, with not always reliable results and with resultant significant costs.

An object of the present invention is to provide a manufacturing process which is simpler and less costly than those used to manufacture the aforedescribed known flowmeters while still ensuring the insulation and protection of the electrical connection between each of the two ring electrodes and the relative conductor wire of the electric cable connected to the control centre.

This object is attained by the process of the present invention, comprising the formation of two ring electrodes in which the rings are provided with projecting parts for their electrical connection, characterised by also comprising the following steps:
- connecting by welding to the projecting part of each of the two electrodes the corresponding conductor wire suitable to be connected to the control centre of the milking plant;
- incorporating the two electrical connections obtained in this manner into a protection block of a suitably electrically insulating plastic material;
- forming the body of the flowmeter by simultaneously incorporating into the outlet nozzle of its body both the electrodes, in the required position, and at least part of said protection block.

This process enables a flowmeter to be obtained which is of lesser cost than known flowmeters while at the same time ensuring the maximum obtainable electrical conductivity of the two electrical connections and their maximum reliability, without dispersion, in addition to electrically insulating and protecting these electrical connections in the best possible manner.

In order to further reduce the flowmeter production cost, the aforesaid process comprises a preliminary step consisting of forming each of the two ring electrodes, including the projecting parts for the electrical connection, from a metal sheet (normally of stainless steel) and using laser cutting techniques, by means of which workpieces respecting the required centesimal tolerance can be obtained directly, only one further step being required consisting of tumbling the electrodes obtained in this manner, to eliminate the burrs.

In known flowmeters the said passage conduit (and hence also the inlet nozzle) has always laid in a vertical plane passing through the axis of the cup-shaped part of the flowmeter body. This means that the milk stream entering the cup-shaped part strikes the closure plug and/or the stem of the flowmeter valve. Because of the velocity of the entering milk stream, it shatters against the closure plug to generate turbulence and foam, with the result that the outflow of milk from the flowmeter slows down. It has also been found that the impact of the entering milk stream against the closure plug and/or the valve stem causes a large part of the fat cells contained in the milk to break down. As is known to the expert of the art, if the obtained milk is used to produce dairy products, break-down of the fat cells gives rise to a lower conversion yield, i.e. a smaller quantity of dairy product is obtained from the same quantity of milk processed, compared with a milk in which the fat cells have not undergone break-down.

Another object of the present invention is to provide a flowmeter of the stated type by which said drawbacks are avoided or at least substantially reduced.

This object is attained by the flowmeter of the present invention, characterised in that the inlet nozzle of the cup-shaped part of the flowmeter body is offset from the plane passing through the axis of the cup-shaped part and in which the axis of the outlet nozzle lies, in order both to prevent the entering milk stream from striking the closure plug and/or the valve stem, and to generate a rotary regime flow within the cup-shaped part.

Conveniently the base of the cup-shaped part is in the form of a funnel, from the lower end of which the outlet nozzle extends. Preferably, at least in the lower part of the inner surface of the funnel-shaped base there are provided projecting ribs of helical extension, the purpose of which is to facilitate as much as possible the maintaining of rotary flow as far as the entry to the outlet nozzle. It will be easily noted that the cup-shaped part having the aforedescribed characteristics is in practice a cyclone, essentially enabling all shaking of the milk stream passing through it to be eliminated, resulting in the absence of foam, in the substantial elimination of breakdown of the milk fat cells (and hence a higher milk quality), and a more rapid discharge of milk from the flowmeter.

In the valves of known flowmeters the elastic membrane is formed in one piece with the stem and the closure plug, for this purpose there being used a suitable rubber or thermoplastic material, which must be of a type suitable for contact with food. The stem is hollow and upperly open, the stem cavity containing a hollow insert of substantially rigid plastic, within which a rigid guide pin extending downwards from the cover can slide. Between the insert and the stem there therefore exists a gap which can collect dirt or simply dust, and hence constitutes a source of bacteria which are not easy to remove. To achieve this, the insert would have to be removed from the stem and then the relative parts washed. As the expert of the art well knows, in doing this it is easy to damage the insert.

A further object of the invention is therefore to provide a flowmeter of the aforesaid type in which this drawback is not present.

This object is also attained by the flowmeter of the present invention, in which the two synthetic materials forming respectively the membrane-stem-closure plug combination and the insert are chosen from those which enable the said combination to be injection overmoulded onto the insert, and which also remain rigidly joined together with time without forming cracks or separations. After many trials it has been found that suitable synthetic materials are for example Tivilon (trademark) for the membrane-stem-closure plug combination and polypropylene for the insert.

Consequently the process of the present invention comprises conveniently the further step of forming the membrane-stem-closure plug combination by injection overmoulding onto the already formed insert, the materials used to form the combination and the insert being chosen from those which remain rigidly joined together with time, without formation of cracks or separations.

The invention will be more apparent from the ensuing description of one embodiment thereof. Reference will be made in this description to the accompanying drawings, in which:
Figure 1 is a side elevation of a flowmeter of the invention;
Figure 2 is a plan view thereof from above;
Figure 3 is the same view as Figure 1, but showing the flowmeter without its cover;
Figure 4 is a plan view thereof from above;
Figure 5 is a section on the line 5-5 of Figure 2;
Figure 6 is an isolated representation of the membrane-stem-closure plug combination, the left half of which is shown sectioned;
Figure 7 is a perspective view of the two ring electrodes of the flowmeter, shown isolated from the rest, with the relative wires of an electric cable already welded to the corresponding radial projecting parts of the electrodes;
Figure 8 is similar to Figure 7, with the difference that it also shows the block of suitable electrically insulating plastic material which protects the electrical connection between the wires of the electric cable and the radial electrode projecting parts.

As can be seen from Figures from 1 to 5, the flowmeter 10 comprises a body 12 a part 13 of which is cup-shaped and is closed upperly by a cover 14. It can also be seen that the flowmeter 10 comprises an inlet nozzle 16 through which the milk from the relative milking unit (not shown) enters, and an outlet nozzle 18 through which the milk, which has entered through the nozzle 16 and passed through the cup-shaped part 13, leaves to be conveyed into the milk channel.

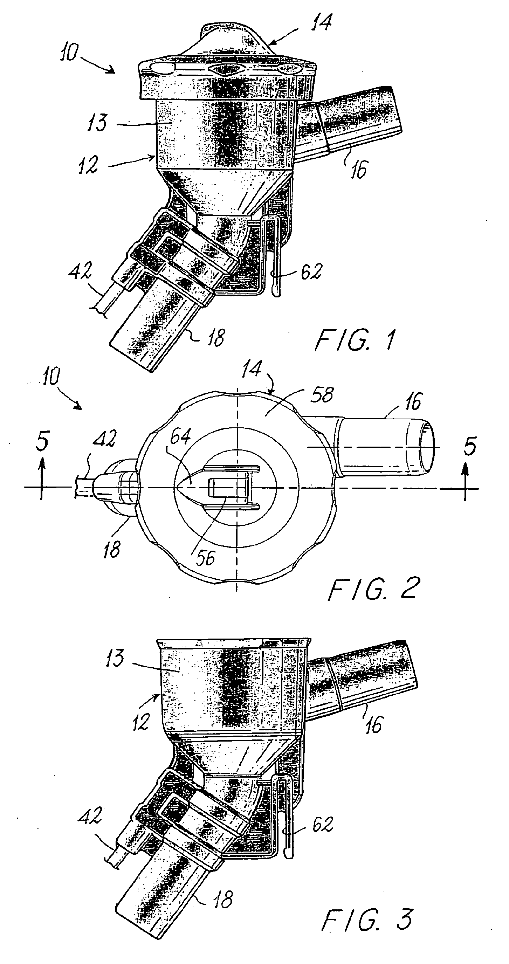

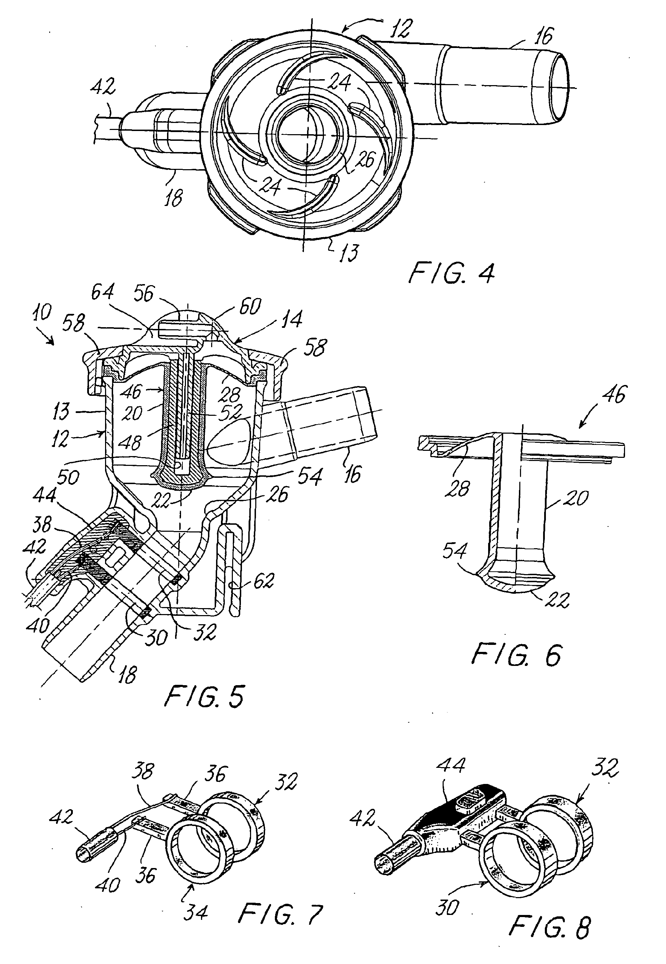

From Figures 2 and 4, it can be seen that the inlet nozzle 16 is out of alignment with the cup-shaped part 13, so that the entering milk stream does not strike (as happens, on the contrary, in known flowmeters) the stem 20 and/or the closure plug 22 of the membrane valve enclosed within the cup-shaped part 13 of the body 12, and so that a rotary flow regime forms therein, also favoured by the funnel shape of the bottom of the cup-shaped part 13 (which hence acts as a cyclone). The discharge opening 26 is located at the lower end of said funnel and forms the mouth of the outlet nozzle 18. Helical ribs 24 provided on the inner surface of the funnel favour the maintaining of the rotary flow regime as far as the discharge opening 26.

The membrane 28 is of a synthetic material suitable for contact with food, in particular an elastic thermoplastic material (for example Tivilon, as already stated) and can assume two stable equilibrium configurations, of which one is that shown in Figure 5 corresponding to a raised closure plug 22 condition (valve open), so that the milk can pass through the flowmeter 10, whereas the other configuration of the membrane 28 (not shown but apparent from that stated) corresponds to a condition in which the closure plug 22 closes the discharge opening 26.

As best seen in Figure 5, two ring electrodes 30 and 32 (best seen isolated in Figures 7 and 8) are incorporated into the body 12 of the flowmeter 10, and specifically into the outlet nozzle 18. The inner diameter of the rings 34 of the electrodes 30 and 32 is exactly equal to the inner diameter of the outlet nozzle 18. The radial projecting parts 36 of the electrodes 30 and 32 form one piece with the relative ring 34. As already stated, each electrode (30, 32) is directly obtained, already complete with radial projecting parts 36, from a stainless steel sheet by laser cutting techniques, with a considerable cost saving on the ring electrodes of known flowmeters, as only a subsequent tumbling operation is required to eliminate burrs. The electrical connection between the wires 38, 40 of the electric cable 42 and the projecting part 36 of the relative ring electrode 32, 34 is made by welding.

As already stated, before incorporating the ring electrodes 32, 34 into the outlet nozzle 18 by injection overmoulding, the two electrical connections between the wires 38, 40 and the relative radial projecting part 36 are protected by previously embedding them in a block 44 of a suitable electrically insulating plastic material (for example polybutylene terephthalate), also obtained by injection overmoulding. The membrane-stem-closure plug combination (visible in Figure 1 and in isolated view in Figure 6), indicated overall by the reference numeral 46, is formed in one piece from a thermoplastic rubber suitable for contact with food (for example that known by the trademark Tivilon). As best seen in Figure 6, the combination 46 comprises the elastic membrane 28, the stem 20 and the closure plug 22. The edge of the membrane 28 is shaped to be able to be interposed between the upper edge of the cup-shaped part 13 of the body 12 and the lower edge of the cover 14, to form a seal when the cover 14 is applied. The stem 20 is hollow and upperly open, there being provided in its interior an insert 48 presenting an upperly open coaxial cylindrical cavity 50 (Figure 5). The insert 48 is of a suitable substantially rigid plastic material (for example polypropylene) and forms one piece with the combination 46 by virtue of having chosen, to form this latter and the insert 48, plastic materials which not only enable the combination 46 to be injection overmoulded onto the insert 48, but which then remain permanently joined to each other without separation or cracks forming between the two materials.

As can be seen from Figure 5, a rigid guide pin 52 extending downwards from the cover 14 and coaxial therewith is slidingly inserted into the coaxial cavity 50 of the insert 48. The diameter of the coaxial cavity 50 of the insert 48 is sufficiently large to enable this cavity to be easily cleaned. In the specific illustrated example, the guide pin 52 is also hollow and lowerly open. To facilitate the sliding of the insert 48 (rigid with the combination 46) on the pin 52, this latter touches the former only via a determined number of small projections provided on its lateral surface.

As best seen in Figure 6, the closure plug 22 presents an annular edge lip 54 for the purpose of achieving gradual and perfect closure of the discharge opening 26. In this respect, when the elastic membrane 28 passes from its stable equilibrium condition of Figure 5 to its other stable equilibrium condition, causing the closure plug 22 to descend, it is the annular lip 54 which firstly touches the discharge opening 26. However, as there is always a determined degree of vacuum present in the outlet nozzle 18 when the milking plant is in operation, and because of the elasticity of the construction material of the closure plug 22, which means that the lip can deform, that part of the closure plug which lies just below the lip 54 is also in contact with the initial part of the inner surface of the outlet nozzle 18, to ensure perfect closure.

As in the case of known flowmeters, the cover 14 of the flowmeter 10 presents a nipple 56 (Figure 5) on which one end of a hose (not shown) can be mounted, the other end of which is connected to the vacuum source of the milking plant. In known flowmeters, when the cover is screwed onto the flowmeter body, the final orientation of said nipple on termination of screwing cannot be predicted, hence it can happen that the nipple has an orientation which is uncomfortable or makes it difficult to connect the relative hose to it.

To prevent this drawback, covers have already been conceived consisting of an internally threaded ring nut screwable onto the threaded edge of the cup-shaped part of the flowmeter body, and of a central cap part which carries the nipple and relative to which the ring nut can rotate. In this manner, when the most convenient or most comfortable orientation for the nipple has been chosen, application of the ring nut to the flowmeter body does not alter its orientation. However, to ensure the necessary seal between the cover and body, a fairly long thread has to be provided, with the drawback that screwing down and unscrewing the cover requires a certain time.

To overcome this drawback, in the flowmeter 10 the cover 14 is still composed of a ring nut 58 and a central cup part which can rotate relative to the ring nut and on which the nipple 56 is provided, but with the difference that the ring nut 58 is bayonet-mounted onto the upper edge of the cup-shaped part 13. In this case, as will be apparent, application of the cover 14 with the nipple 56 in the required orientation is much easier and quicker because of the bayonet coupling. If the orientation of the nipple 56 needs to be changed, this can be very easily and quickly achieved with a minimal slackening of the ring nut 58.

It should be noted that the nipple 56 is provided in a cavity 64 in the cap part 60 of the cover 14, so that the nipple 56 does not project from the profile of the cover 14, as is apparent from Figure 5.

As can be seen from Figures 1, 3 and 5, the body 12 presents a vertical slot 62 open at its lower end, to enable the flowmeter 10 to be mounted on a suitable bracket (not shown) to be fixed to a support, and in particular to a wall.

In conclusion, the aforedescribed and illustrated flowmeter is of much lower manufacturing cost than known flowmeters, in particular because the ring electrodes 32 and 34 are formed in one piece from stainless steel sheet using laser cutting techniques, because of the provision of the overmoulded block 44 for protecting and insulating the electrical connections, and because these latter are made by welding.

Another considerable advantage is the fact that this flowmeter, because of the rotary regime of the milk flow into the lower chamber of its body and because of its considerable hygienic characteristics, milk of higher quality is obtained than that obtained in milking plants provided with known flowmeters, resulting in a considerable economical advantage for the farmer. It is also more reliable than known flowmeters, easy to install, and of practical and simple maintenance and cleaning.

## Claims

1. A process for manufacturing a flowmeter (10) for controlling the automatic detachment device in a milking plant, the flowmeter (10) being of the type comprising:
- a body (12) having a cup-shaped part (13), the body (12) also comprising, for the milk, an inlet nozzle (16) connected to the corresponding milking unit, and an outlet nozzle (18) connected to the milk channel, there being present in the outlet nozzle (18) at a determined distance apart two electrodes (30, 32) each connected to a corresponding conductor wire (38, 40) suitable to be connected to a control centre with which the plant is provided;
- a cover (14) for closing the cup-shaped part (13) of the body (12), the cover (14) being provided with a nipple (56) able to be connected to the vacuum source with which the plant is provided;
- an elastic membrane (28) with its edge sealedly interposed between the upper edge of the cup-shaped part (13) of the body (12) and the cover (14), from the centre of the membrane (28) there downwardly extending a stem (20), at the lower end of which there is provided a closure plug (22) for closing the mouth (26) of the outlet nozzle (18), the membrane (28) being able to assume only two stable equilibrium configurations, namely a configuration in which the closure plug (22) closes said mouth (26) and a configuration in which the closure plug (22) is raised in order not to close the mouth (26);
the process being **characterised by** comprising the following steps:
- connecting to the projecting part (36) of each of the two electrodes (30, 32) by welding, the corresponding conductor wire (38, 40) suitable to be connected to the milking plant control centre;
- incorporating the two resultant electrical connections into a protection block (44) of a suitable electrically insulating plastic material;
- forming the body (12) of the flowmeter (10) by simultaneously incorporating into the outlet nozzle (18) of its body (12) both the electrodes (30, 32) in the intended position, and at least part of said protection block (44).

2. A process as claimed in claim 1, comprising a preliminary step consisting of producing each of the two electrodes (30, 32) in the form of a ring, including the projecting parts (36), starting from a metal sheet and using laser cutting techniques, which directly enable workpieces respecting the required centesimal tolerance to be obtained, followed by a step consisting of a tumbling operation on the obtained electrodes (30, 32) to eliminate burrs.

3. A process as claimed in claim 1, wherein the protection block (44) incorporating the electrical connections is formed by injection moulding a suitable plastic material.

4. A process as claimed in claim 1, wherein the body (12) which incorporates the protection block (44) is formed by injection moulding a suitable plastic material.

5. A process as claimed in claim 1, wherein in the flowmeter (10) the membrane (28), the stem (20) and closure plug (22) form a one-piece combination (46) in synthetic material suitable for contact with food, the process comprising a further step consisting of forming the membrane-stem-closure plug combination (46) by injection overmoulding onto the already formed insert (48), the synthetic materials used to form the combination (46) and the insert (48) being chosen from those which remain rigidly joined together with time, without forming cracks or separations.

6. A flowmeter (10) manufactured in accordance with claim 1, comprising:
- a body (12) having a cup-shaped part (13), the body (12) also comprising, for the milk, an inlet nozzle (16) connected to the corresponding milking unit, and an outlet (18) connected to the milk channel, there being present in the outlet nozzle (18) at a determined distance apart two electrodes (30, 32) each connected to a corresponding conductor wire (38, 40) suitable to be connected to a control centre with which the plant is provided;
- a cover (14) for closing the cup-shaped part (13) of the body (12), the cover (14) being provided with a nipple (56) able to be connected to the vacuum source with which the plant is provided;
- an elastic membrane (28) with its edge sealedly interposed between the upper edge of the cup-shaped part (13) of the body (12) and the cover (14), from the centre of the memberane (28) there downwardly extending a stem (20), at the lower end of which there is provided a closure plug (22) for closing the mouth (26) of the outlet nozzle (18), the membrane (28) being able to assume only two stable equilibrium configurations, namely a configuration in which the closure plug (22) closes said mouth (26) and a configuration in which the closure plug (22) is raised in order not to close the mouth (26);
- **characterised in that** the two electrodes (30, 32) are shaped as a ring and are provided with a radial projecting part (36) to which the corresponding electric wires (38, 40) terminating at the control centre are suitable to be connected, the two electrical connections obtained in this manner being incorporated into a block (44) of a suitable electrically insulating plastic material, which is itself at least partly incorporated into the body (12) of the flowmeter (10).

7. A flowmeter (10) as claimed in claim 6, wherein the inlet nozzle (16) of the cup-shaped part (13) of the flowmeter body (12) is offset from the plane which passes through the cup-shaped part (13) and in which the axis of the outlet nozzle (18) lies, in order both to prevent the entering milk stream from striking the closure plug (22) and/or the stem (20), and to generate a rotary regime flow within the cup-shaped part (13).

8. A flowmeter (10) as claimed in claims 7, wherein the base (15) of the cup-shaped part (13) of the body (12) is in the form of a funnel.

9. A flowmeter (10) as claimed in claim 8, wherein projecting ribs (24) of helical extension are provided at least in the lower part of the inner surface of the funnel-shaped base (15) of the cup-shaped part (13).

10. A flowmeter (10) as claimed in claim 6, wherein the block (44) into which the electrical connections between the radial projecting part (36) of each ring electrode (30, 32) and the corresponding electric wires (38, 40)are incorporated is of polybutylene terephthalate.

11. A flowmeter (10) as claimed in claim 6, wherein the membrane (28), the stem (20) and the closure plug (22) form a one-piece combination (46) in an elastic synthetic material suitable for contact with food.

12. A flowmeter (10) as claimed in claim 11, wherein the combination is of Tivilon.

13. A flowmeter (10) as claimed in claim 11, wherein the stem (20) is hollow and upperly open, the stem (20) containing an upperly open hollow insert (48) of substantially rigid synthetic material forming one piece with the stem (20), there being inserted into the cavity (50) of the insert (48) a rigid guide pin (52) extending downwards from the central part of the cover (14), the synthetic materials used to form respectively the membrane (20)-stem (20)-closure plug (22) combination and the insert (48) being of the injection mouldable type and being chosen from those which remain rigidly joined together with time.

14. A flowmeter (10) as claimed in claim 13, wherein the insert (48) is of polypropylene.

15. A flowmeter (10) as claimed in claim 13, wherein the closure plug (22) disposed at the lower end of the stem (20) presents an annular lip (54) intended to make the initial contact with the mouth (26) of the outlet nozzle (18).

16. A flowmeter (10) as claimed in claim 9, wherein the cover (14) comprises a peripheral ring nut (58) and a central part (60) which is rotatable relative to the ring nut (58) and on which (60) the nipple (56) is provided, the ring nut (58) being bayonet-mounted onto the upper edge of the cup-shaped part (13) of the body (12) of the flowmeter (10).

17. A flowmeter (10) as claimed in claim 9, wherein the body (12) is provided with a vertical slot (62), open at its lower end, to enable the flowmeter (10) to be mounted on a suitable bracket fixable to a support and in particular to a wall.

## Patentansprüche

1. Verfahren zur Herstellung eines Durchflussmessers (10) zum Steuern der automatischen Melkzeugabnahme in einer Melkanlage, wobei der Durchflussmesser (10) von der Art ist, welche umfasst:
- einen Körper (12) mit einem topfförmigen Teil (13), wobei der Körper (12) für die Milch ebenfalls einen mit der entsprechenden Melkeinheit verbundenen Einlassstutzen (16) und einen mit dem Milchkanal verbundenen Auslassstutzen (18) umfasst, wobei in dem Auslassstutzen (18) in einem bestimmten Abstand voneinander zwei Elektroden (30, 32) vorhanden sind, welche jeweils mit einem entsprechenden Leiterdraht (38, 40) verbunden sind, der geeignet ist, um mit einem Steuerzentrum verbunden zu werden, mit welchem die Anlage versehen ist;
- eine Abdeckung (14) zum Schließen des topfförmigen Teils (13) des Körpers (12), wobei an der Abdeckung (14) ein Rohrstutzen (56) vorgesehen ist, welcher mit der Vakuumquelle verbunden werden kann, mit welcher die Anlage versehen ist;
- eine elastische Membran (28), deren Rand abgedichtet zwischen den oberen Rand des topfförmigen Teils (13) des Körpers (12) und die Abdeckung (14) eingefügt ist, wobei sich von der Mitte der Membran (28) nach unten ein Schaft (20) erstreckt, an dessen unterem Ende ein Verschlussstopfen (22) zum Schließen der Öffnung (26) des Auslassstutzens (18) vorgesehen ist, wobei die Membran (28) in der Lage ist, nur zwei stabile Gleichgewichtskonfigurationen einzunehmen, und zwar eine Konfiguration, in der der Verschlussstopfen (22) die Öffnung (26) schließt, und eine Konfiguration, in der der Verschlussstopfen (22) angehoben ist, um die Öffnung (26) nicht zu schließen;
wobei das Verfahren **dadurch gekennzeichnet ist, dass** es die folgenden Schritte umfasst:
- Verbinden des entsprechenden Leiterdrahts (38, 40), welcher geeignet ist, um mit dem Steuerzentrum der Melkanlage verbunden zu werden, mit dem abstehenden Teil (36) jeder der zwei Elektroden (30, 32) durch Schweißen;
- Einfügen der zwei resultierenden elektrischen Verbindungen in einen Schutzblock (44) aus einem geeigneten, elektrisch isolierenden Kunststoffmaterial;
- Ausbilden des Körpers (12) des Durchflussmessers (10), indem in den Auslassstutzen (18) seines Körpers (12) gleichzeitig sowohl die Elektroden (30, 32) in der beabsichtigten Position als auch wenigstens ein Teil des Schutzblockes (44) eingefügt wird.

2. Verfahren nach Anspruch 1, umfassend einen vorbereitenden Schritt, welcher aus einem Herstellen jeder der zwei Elektroden (30, 32) in der Form eines Rings einschließlich der abstehenden Teile (36) ausgehend von einem Blech und unter Verwendung von Laserschneidetechniken besteht, welche es direkt ermöglichen, dass man Werkstücke erhält, die die erforderlichen Toleranzen im Hundertstelbereich einhalten, gefolgt von einem Schritt, welcher aus einem Gleitschleifarbeitsgang an den erhaltenen Elektroden (30, 32) besteht, um Grate zu beseitigen.

3. Verfahren nach Anspruch 1, wobei der Schutzblock (44), welcher die elektrischen Verbindungen enthält, durch Spritzgießen eines geeigneten Kunststoffmaterials ausgebildet wird.

4. Verfahren nach Anspruch 1, wobei der Körper (12), welcher den Schutzblock (44) enthält, durch Spritzgießen eines geeigneten Kunststoffmaterials ausgebildet wird.

5. Verfahren nach Anspruch 1, wobei bei dem Durchflussmesser (10) die Membran (28), der Schaft (20) und der Verschlussstopfen (22) eine einstückige Kombination (46) aus einem Kunststoff ausbilden, welcher für einen Kontakt mit Lebensmitteln geeignet ist, wobei das Verfahren einen weiteren Schritt umfasst, welcher aus einem Ausbilden der Membran-Schaft-Verschlussstopfen-Kombination (46) durch Umspritzen des bereits ausgebildeten Einsatzes (48) besteht, wobei die Kunststoffe, die zur Ausbildung der Kombination (46) und des Einsatzes (48) verwendet werden, aus denjenigen ausgewählt werden, welche über die Zeit fest miteinander verbunden bleiben, ohne Risse oder Ablösungen zu bilden.

6. Durchflussmesser (10), welcher gemäß Anspruch 1 hergestellt wird, umfassend:
- einen Körper (12) mit einem topfförmigen Teil (13), wobei der Körper (12) für die Milch ebenfalls einen mit der entsprechenden Melkeinheit verbundenen Einlassstutzen (16) und einen mit dem Milchkanal verbundenen Auslass (18) umfasst, wobei in dem Auslassstutzen (18) in einem bestimmten Abstand voneinander zwei Elektroden (30, 32) vorhanden sind, welche jeweils mit einem entsprechenden Leiterdraht (38, 40) verbunden sind, der geeignet ist, um mit einem Steuerzentrum verbunden zu werden, mit dem die Anlage versehen ist;
- eine Abdeckung (14) zum Schließen des topfförmigen Teils (13) des Körpers (12), wobei an der Abdeckung (14) ein Rohrstutzen (56) vorgesehen ist, welcher mit der Vakuumquelle verbunden werden kann, mit welcher die Anlage versehen ist;
- eine elastische Membran (28), deren Rand abgedichtet zwischen den oberen Rand des topfförmigen Teils (13) des Köpers (12) und die Abdeckung (14) eingefügt ist, wobei sich von der Mitte der Membran (28) nach unten ein Schaft (20) erstreckt, an dessen unterem Ende ein Verschlussstopfen (22) zum Schließen der Öffnung (26) des Auslassstutzens (18) vorgesehen ist, wobei die Membran (28) in der Lage ist, nur zwei stabile Gleichgewichtskonfigurationen einzunehmen, und zwar eine Konfiguration, in der der Verschlussstopfen (22) die Öffnung (26) schließt, und eine Konfiguration, in der der Verschlussstopfen (22) angehoben ist, um die Öffnung (26) nicht zu schließen;
- **dadurch gekennzeichnet, dass** die zwei Elektroden (30, 32) als ein Ring ausgebildet sind und mit einem radial abstehenden Teil (36) versehen sind, wobei die an dem Steuerzentrum endenden entsprechenden elektrischen Drähte (38, 40) geeignet sind, mit dem abstehenden Teil (36) verbunden zu werden, wobei die zwei auf diese Weise erhaltenen elektrischen Verbindungen in einen Block (44) aus einem geeigneten, elektrisch isolierenden Kunststoffmaterial eingefügt sind, welcher selbst wenigstens teilweise in den Körper (12) des Durchflussmessers (10) eingefügt ist.

7. Durchflussmesser (10) nach Anspruch 6, wobei der Einlassstutzen (16) des topfförmigen Teils (13) des Körpers (12) des Durchflussmessers zu der Ebene versetzt ist, welche durch den topfförmigen Teil (13) verläuft und in welcher die Achse des Auslassstutzens (18) liegt, um sowohl zu verhindern, dass der eintretende Milchstrom auf den Verschlussstopfen (22) und/oder den Schaft (20) auftrifft, als auch um eine Drehströmung in dem topfförmigen Teil (13) zu erzeugen.

8. Durchflussmesser (10) nach Anspruch 7, wobei die Basis (15) des topfförmigen Teils (13) des Körpers (12) trichterförmig ist.

9. Durchflussmesser (10) nach Anspruch 8, wobei abstehende Rippen (24) von schraubenförmigen Fortsätzen wenigstens in dem unteren Teil der Innenoberfläche der trichterförmigen Basis (15) des topfförmigen Teils (13) vorgesehen sind.

10. Durchflussmesser (10) nach Anspruch 6, wobei der Block (44), in den die elektrischen Verbindungen zwischen dem radial abstehenden Teil (36) jeder Ringelektrode (30, 32) und den entsprechenden elektrischen Drähten (38, 40) eingefügt sind, aus Polybutylenterephthalat besteht.

11. Durchflussmesser (10) nach Anspruch 6, wobei die Membran (28), der Schaft (20) und der Verschlussstopfen (22) eine einstückige Kombination (46) aus einem elastischen Kunststoff ausbilden, welcher für einen Kontakt mit Lebensmitteln geeignet ist.

12. Durchflussmesser (10) nach Anspruch 11, wobei die Kombination aus Tivilon besteht.

13. Durchflussmesser (10) nach Anspruch 11, wobei der Schaft (20) hohl und oben offen ist, wobei der Schaft (20) einen oben offenen hohlen Einsatz (48) aus einem im Wesentlichen starren Kunststoff enthält, welcher ein Stück mit dem Schaft (20) ausbildet, wobei in den Hohlraum (50) des Einsatzes (48) ein starrer Führungsstift (52) eingesetzt ist, welcher sich von dem mittleren Teil der Abdeckung (14) nach unten erstreckt, wobei die Kunststoffe, welche verwendet werden, um jeweils die Membran (20)-Schaft (20)-Verschlussstopfen (22)-Kombination und den Einsatz (48) auszubilden von der spritzgießbaren Art sind und aus denjenigen ausgewählt sind, welche über die Zeit fest miteinander verbunden bleiben.

14. Durchflussmesser (10) nach Anspruch 13, wobei der Einsatz (48) aus Polypropylen besteht.

15. Durchflussmesser (10) nach Anspruch 13, wobei der an dem unteren Ende des Schaftes (20) angeordnete Verschlussstopfen (22) eine ringförmige Lippe (54) aufweist, welche den anfänglichen Kontakt mit der Öffnung (26) des Auslassstutzens (18) herstellen soll.

16. Durchflussmesser (10) nach Anspruch 9, wobei die Abdeckung (14) eine Umfangsringmutter (58) und einen mittleren Teil (60) umfasst, welcher relativ zu der Ringmutter (58) drehbar ist und an dem (60) der Rohrstutzen (56) vorgesehen ist, wobei die Ringmutter (58) mit einer Bajonettverbindung an dem oberen Rand des topfförmigen Teils (13) des Körpers (12) des Durchflussmessers (10) angebracht ist.

17. Durchflussmesser (10) nach Anspruch 9, wobei der Körper (12) mit einem an seinem unteren Ende offenen vertikalen Schlitz (62) versehen ist, um zu ermöglichen, dass der Durchflussmesser (10) an einer geeigneten Halterung angebracht wird, welche an einer Trägervorrichtung und insbesondere einer Wand befestigbar ist.

## Revendications

1. Procédé de fabrication d'un débitmètre (10) pour commander le dispositif de séparation automatique dans une installation de traite, le débitmètre (10) étant du type comportant :
- un corps (12) ayant une partie en forme de coupelle (13), le corps (12) comportant aussi, pour le lait, une buse d'entrée (16) reliée à l'unité de traite correspondante, et une buse de sortie (18) reliée au canal de lait, deux électrodes (30, 32) étant présentes dans la buse de sortie (18) en étant écartées d'une distance déterminée, chacune étant reliée à un fil conducteur correspondant (38, 40) adapté pour être connecté à un centre de commande dont l'installation est munie,
- un couvercle (14) pour fermer la partie en forme de coupelle (13) du corps (12), le couvercle (14) étant muni d'un raccord (56) pouvant être connecté à la source de vide dont l'installation est munie,
- une membrane élastique (28) ayant son bord interposé de manière étanche entre le bord supérieur de la partie en forme de coupelle (13) du corps (12) et le couvercle (14), une tige (20) s'étendant à partir du centre de la membrane (28) vers le bas, à l'extrémité de laquelle est agencé un bouchon de fermeture (22) pour fermer l'embouchure (26) de la buse de sortie (18), la membrane (28) pouvant prendre uniquement deux configurations d'équilibre stable, à savoir une configuration dans laquelle le bouchon de fermeture (22) ferme ladite embouchure (26) et une configuration dans laquelle le bouchon de fermeture (22) est levé afin de ne pas fermer l'embouchure (26),
le procédé étant **caractérisé par** les étapes suivantes consistant à :
- relier à la partie en saillie (36) de chacune des deux électrodes (30, 32), par soudage, le fil conducteur correspondant (38, 40) adapté pour être connecté au centre de commande de l'installation de traite,
- incorporer les deux connexions électriques résultantes dans un bloc de protection (44) constitué d'une matière plastique électriquement isolante adaptée,
- former le corps (12) du débitmètre (10) en incorporant simultanément dans la buse de sortie (18) de son corps (12) les deux électrodes (30, 32) dans la position prévue, et au moins une partie dudit bloc de protection (44).

2. Procédé selon la revendication 1, comportant une étape préliminaire consistant à produire chacune des deux électrodes (30, 32) sous la forme d'un anneau, comprenant les parties en saillie (36), en démarrant à partir d'une feuille de métal et en utilisant des techniques de découpe au laser, qui permettent d'obtenir directement des pièces respectant la tolérance centésimale requise, ce qui est suivi d'une étape constituée d'une opération de tonnelage des électrodes obtenues (30, 32) pour éliminer des bavures.

3. Procédé selon la revendication 1, dans lequel le bloc de protection (44) incorporant les connexions électriques est formé par moulage par injection d'une matière plastique adaptée.

4. Procédé selon la revendication 1, dans lequel le corps (12) qui incorpore le bloc de protection (44) est formé par moulage par injection d'une matière plastique adaptée.

5. Procédé selon la revendication 1, dans lequel le débitmètre (10), la membrane (28), la tige (20) et le bouchon de fermeture (22) forment une combinaison en une seule pièce (46) en matière synthétique adaptée pour être en contact avec des aliments, le procédé comportant une étape supplémentaire consistant à former la combinaison membrane-tige-bouchon de fermeture (46) par surmoulage par injection sur l'élément rapporté déjà formé (48), les matériaux synthétiques utilisés pour former la combinaison (46) et l'élément rapporté (48) étant choisis à partir de ceux qui restent reliés ensemble de manière rigide avec le temps, sans former de craquelures ni se séparer.

6. Débitmètre (10) fabriqué selon la revendication 1, comportant :
- un corps (12) ayant une partie en forme de coupelle (13), le corps (12) comportant aussi, pour le lait, une buse d'entrée (16) reliée à l'unité de traite correspondante, et une sortie (18) reliée au canal de lait, deux électrodes (30, 32) étant présentes dans la buse de sortie (18) en étant écartées d'une distance déterminée, chacune étant reliée à un fil conducteur correspondant (38, 40) adapté pour être connecté au centre de commande dont l'installation est munie,
- un couvercle (14) pour fermer la partie en forme de coupelle (13) du corps (12), le couvercle (14) étant muni d'un raccord (56) pouvant être connecté à la source de vide dont l'installation est munie,
- une membrane élastique (28) ayant son bord interposé de manière étanche entre le bord supérieur de la partie en forme de coupelle (13) du corps (12) et le couvercle (14), une tige (20) s'étendant à partir du centre de la membrane (28) vers le bas, à l'extrémité de laquelle est agencé un bouchon de fermeture (22) pour fermer l'embouchure (26) de la buse de sortie (18), la membrane (28) pouvant prendre uniquement deux configurations d'équilibre stable, à savoir une configuration dans laquelle le bouchon de fermeture (22) ferme ladite embouchure (26) et une configuration dans laquelle le bouchon de fermeture (22) est levé afin de ne pas fermer l'embouchure (26),
- **caractérisé en ce que** les deux électrodes (30, 32) sont formées sous la forme d'un anneau et sont munies d'une partie en saillie radiale (36) sur laquelle les fils électriques correspondants (38, 40) se terminant au niveau du centre de commande peuvent être connectés, les deux connexions électriques obtenues de cette manière étant incorporées dans un bloc (44) constitué d'une matière plastique électriquement isolante adaptée, qui est lui-même au moins partiellement incorporé dans le corps (12) du débitmètre (10).

7. Débitmètre (10) selon la revendication 6, dans lequel la buse d'entrée (16) de la partie en forme de coupelle (13) du corps (12) de débitmètre est décalée à partir du plan qui traverse la partie en forme de coupelle (13) et dans lequel est situé l'axe de la buse de sortie (18), afin à la fois d'empêcher que le flux de lait entrant ne vienne frapper contre le bouchon de fermeture (22) et/ou la tige (20), et de produire un écoulement à régime rotatif dans la partie en corps de coupelle (13).

8. Débitmètre (10) selon la revendication 7, dans lequel la base (15) de la partie en forme de coupelle (13) du corps (12) a la forme d'un entonnoir.

9. Débitmètre (10) selon la revendication 8, dans lequel des nervures en saillie (24) ayant une étendue hélicoïdale sont agencées au moins dans la partie inférieure de la surface intérieure de la base en forme d'entonnoir (15) de la partie en forme de coupelle (13).

10. Débitmètre (10) selon la revendication 6, dans lequel le bloc (44) dans lequel les connexions électriques entre la partie en saillie radiale (36) de chaque électrode en anneau (30, 32) et les fils électriques correspondants (38, 40) sont incorporées est en polybutylène téréphtalate.

11. Débitmètre (10) selon la revendication 6, dans lequel la membrane (28), la tige (20) et le bouchon de fermeture (22) forment une combinaison en une seule pièce (46) en matériau synthétique élastique adapté pour être en contact avec un aliment.

12. Débitmètre (10) selon la revendication 11, dans lequel la combinaison est constituée de Tivilon.

13. Débitmètre (10) selon la revendication 11, dans lequel la tige (20) est creuse et ouverte vers le haut, la tige (20) contenant un élément rapporté creux ouvert vers le haut (48) constitué d'un matériau synthétique sensiblement rigide formant une seule pièce avec la tige (20), un axe de guidage rigide (52) étant inséré dans la cavité (50) de l'élément rapporté (48) en s'étendant vers le bas à partir de la partie centrale du couvercle (14), les matériaux synthétiques utilisés pour former respectivement la combinaison de membrane (28)-tige (20)-bouchon de fermeture (22) et l'élément rapporté (48) étant du type pouvant être moulés par injection et étant choisis parmi ceux qui restent reliés ensemble de manière rigide avec le temps.

14. Débitmètre (10) selon la revendication 13, dans lequel l'élément rapporté (48) est constitué de polypropylène.

15. Débitmètre (10) selon la revendication 13, dans lequel le bouchon de fermeture (22) disposé à l'extrémité inférieure de la tige (20) présente une lèvre annulaire (54) prévue pour faire le contact initial avec l'embouchure (26) de la buse de sortie (18).

16. Débitmètre (10) selon la revendication 9, dans lequel le couvercle (14) comporte un écrou en anneau périphérique (58) et une partie centrale (60) qui est rotative par rapport à l'écrou en anneau (58) et sur laquelle (60) le raccord (56) est agencé, l'écrou en anneau (58) étant monté par baïonnette sur le bord supérieur de la partie en forme de coupelle (13) du corps (12) du débitmètre (10).

17. Débitmètre (10) selon la revendication 9, dans lequel le corps (12) est muni d'une fente verticale (62), ouverte à son extrémité inférieure, pour permettre de monter le débitmètre (10) sur un étrier adapté pouvant être fixé sur un support et en particulier une paroi.
